# EUROPEAN PATENT APPLICATION

(11) **EP 4 825 995 A1**
(43) Date of publication of application: **21.10.2026**
(21) Application number: 24930669.7
(22) Date of filing: 05.12.2024
(51) Int. Cl.: C22B 1/16

(54) **SINTERED ORE PRODUCTION METHOD**

(30) Priority: 19.03.2024 JP 2024043121
(71) Applicant: JFE Steel Corporation, Tokyo 100-0011 (JP)
(72) Inventor: IWAMI Yuji, Tokyo 100-0011 (JP); FUJIWARA Shimpei, Tokyo 100-0011 (JP); MURAO Akinori, Tokyo 100-0011 (JP)
(74) Representative: Grünecker Patent- und Rechtsanwälte PartG mbB
(86) International application number: PCT/JP2024/043086
(87) International publication number: WO 2025/197206

(57) **Abstract**

Provided is a method for producing a sintered ore, which is advantageous in that, by suppressing a lack of heat in the upper layer of the raw material layer, production of sintered ore containing unburnt carbon in the upper layer of the raw material layer can be suppressed.

A method for producing a sintered ore, comprising the steps of: blending an iron raw material, a first carbonaceous material, and a second carbonaceous material having a combustion start temperature lower than that of the first carbonaceous material to prepare a sintering raw material (raw material blending step, step S1); feeding the sintering raw material on a pallet of a sintering machine to form a raw material layer (raw material layer forming step, step S2); and igniting a surface of the raw material layer to sinter the sintering raw material (sintering step, step S3), wherein, in the raw material layer forming step (step S2), the blending ratio of the second carbonaceous material in an upper layer of the raw material layer 7 is higher than the blending ratio of the second carbonaceous material in a lower layer of the raw material layer, wherein the upper layer is positioned above a middle portion of the raw material layer, as viewed in the thicknesswise direction of the raw material layer 7, and the lower layer is positioned below the middle portion of the raw material layer, as viewed in the thicknesswise direction.

## Description

### Technical Field

The present invention relates to a method for producing a sintered ore.

### Background Art

In an iron ore sintering process, iron ore, a flux, and a carbon material as a solid fuel are mixed to prepare a sintering raw material, and the sintering raw material is fed on a pallet of a sintering machine to form a raw material layer. The top surface of the raw material layer is ignited to burn the carbon material, and the sintering raw material is sintered using the resultant heat of combustion while sucking air from the bottom surface side of the raw material layer. Therefore, generally, the air sucked into the raw material layer from the top surface of the raw material layer causes the upper layer of the raw material layer to suffer a lack of heat, as compared to the lower layer of the raw material layer. Such a phenomenon possibly generates unburnt carbon which corresponds to the carbon material in the upper layer that has not completely burnt, thus producing sintered ore having a large unburnt carbon content. In the production of sintered ore, the temperature of sintered ore having a large unburnt carbon content is lower than the temperature of sintered ore having a small unburnt carbon content.

The sintered ore produced by a sintering machine is crushed when discharged from the sintering machine, and charged into a cooler, followed by cooling. However, there is a possibility that when the sintered ore having a large unburnt carbon content and the uncooled sintered ore are in contact with each other in the cooler, the unburnt carbon burns, so that the cooling efficiency for the sintered ore in the cooler is reduced.

Further, in the iron ore sintering process, carbon dioxide is generated due to combustion of the carbon material. Therefore, as concern about preservation of the environment is growing recently, for the purpose of reducing a burden on the environment, the use of a biomass-derived carbon material as a carbon material is studied. The reason for this is that biomass absorbs carbon dioxide until plants which are a raw material for biomass have grown, and therefore the amount of carbon dioxide emitted from the fuel using biomass can be regarded as zero from the standpoint of carbon neutrality.

An example of a method for producing a sintered ore using a biomass-derived solid carbonaceous material is described in PTL 1. In the method, oil palm kernel shell charcoal is mixed as a biomass-derived solid carbonaceous material into the sintering raw material. Further, when forming the raw material layer, the solid carbonaceous material other than oil palm kernel shell charcoal is caused to undergo segregation in the upper layer of the raw material layer, so that a large amount of oil palm kernel shell charcoal is distributed in the lower layer of the raw material layer. This is considered to improve the burning properties in the lower layer of the raw material layer, enabling an improvement of the productivity of sintered ore. Further, the oil palm kernel shell charcoal is a biomass-derived carbon material, and therefore is considered to achieve a reduction of the amount of carbon dioxide emitted.

### Citation List

### Patent Literature

PTL 1: JP5786795B

### Summary of Invention

### Technical Problem

In the method of PTL 1, the use of oil palm kernel shell charcoal enables an improvement of the productivity of sintered ore, and further can suppress the amount of carbon dioxide emitted. However, no reference is made with respect to studies about the possibility that sintered ore containing unburnt carbon is produced due to a lack of heat in the upper layer of the raw material layer, and the method needs to be improved in this respect.

The present invention has been made with a view toward solving the above-mentioned problem, and an object of the invention is to provide a method for producing a sintered ore, which is advantageous in that, by suppressing a lack of heat in the upper layer of the raw material layer, production of sintered ore containing unburnt carbon in the upper layer of the raw material layer can be suppressed.

### Solution to Problem

A means for solving the problems is as follows.
[1] A method for producing a sintered ore, comprising the steps of: blending an iron raw material, a first carbonaceous material, and a second carbonaceous material having a combustion start temperature lower than that of the first carbonaceous material to prepare a sintering raw material (raw material blending step); feeding the sintering raw material on a pallet of a sintering machine to form a raw material layer (raw material layer forming step); and igniting a surface of the raw material layer to sinter the sintering raw material (sintering step), wherein, in the raw material layer forming step, the blending ratio of the second carbonaceous material in an upper layer of the raw material layer is higher than the blending ratio of the second carbonaceous material in a lower layer of the raw material layer, wherein the upper layer of the raw material layer is positioned above a middle portion of the raw material layer, as viewed in the thicknesswise direction of the raw material layer, and the lower layer of the raw material layer is positioned below the middle portion of the raw material layer, as viewed in the thicknesswise direction of the raw material layer.
[2] The method for producing a sintered ore according to item [1] above, wherein the second carbonaceous material has a particle diameter smaller than the particle diameter of the first carbonaceous material, and wherein, in the raw material layer forming step, the sintering raw material stored in a surge hopper is discharged by a drum feeder and fed on the pallet.
[3] The method for producing a sintered ore according to item [1] or [2] above, wherein the first carbonaceous material blended in the sintering raw material in the raw material blending step is a fossil fuel-derived carbon material, and the second carbonaceous material is a carbon material other than fossil fuels.

### Advantageous Effects of Invention

According to the present invention, a lack of heat in the upper layer of the raw material layer can be suppressed, and this can suppress production of sintered ore containing unburnt carbon in the upper layer of the raw material layer.

### Brief Description of Drawings

[FIG. 1] FIG. 1 is a diagram for explaining the method for producing a sintered ore of the present embodiment.
[FIG. 2] FIG. 2 is a diagrammatic view showing an example of the production facility for sintered ore, to which the method for producing a sintered ore of the present embodiment can be applied.
[FIG. 3] FIG. 3 is a diagram with respect to the Comparative Examples and Examples, showing the relationship between the unburnt carbon ratio and the ratio of the blending ratio of the biomass charcoal in the upper layer to the average blending ratio of the biomass charcoal in the whole of the raw material layer.
[FIG. 4] FIG. 4 is a diagram with respect to the Comparative Examples and Examples, showing the relationship between the unburnt carbon ratio and the proportion of the biomass charcoal in the whole of the carbon material in the upper layer, i.e., the biomass charcoal replacement ratio.

### Description of Embodiments

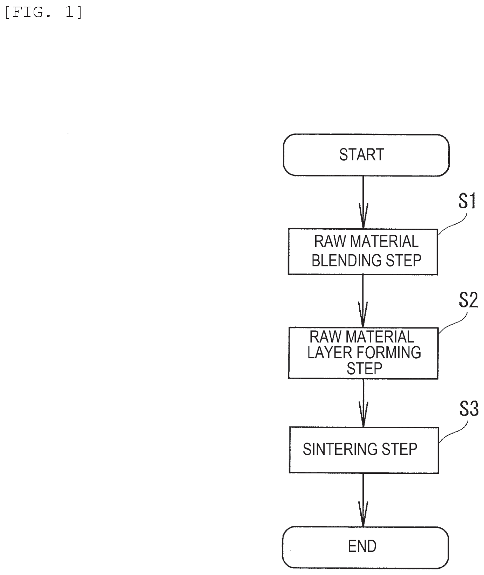

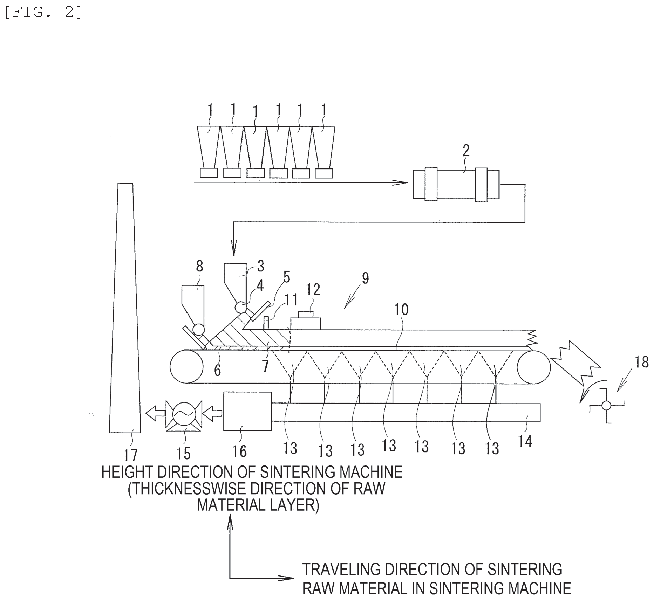

Hereinbelow, an embodiment of the present invention (hereinafter, referred to as "the present embodiment") will be described with reference to the drawings. FIG. 1 is a diagram for explaining the method for producing a sintered ore of the present embodiment. In the example shown in FIG. 1, a plurality of raw materials are first mixed in a predetermined ratio to conduct granulation of sintering raw material (step S1, raw material blending step). FIG. 2 is a diagrammatic view showing an example of the production facility for sintered ore, to which the method for producing a sintered ore of the present embodiment can be applied. As shown in FIG. 2, the production facility for sintered ore is provided with a plurality of hoppers 1, and the raw materials are stored in the respective hoppers 1.

Examples of raw materials for the sintering raw material include an iron raw material, an auxiliary raw material, and a carbon material. Examples of iron raw materials include an iron ore-derived iron ore powder and a powder recovered in a steel plant. Examples of auxiliary raw materials include limestone, dolomite, and quick lime. Examples of carbon materials include a fossil fuel-derived coke breeze, anthracite, and a biomass-derived biomass charcoal. In the present embodiment, the particle diameter of the biomass charcoal is smaller than that of the below-mentioned granulated raw material. These raw materials are stored in the respective hoppers 1. Then, the raw materials in a predetermined ratio are fed from the respective hoppers 1 on a conveyer (not shown), and conveyed by the conveyer to a drum mixer 2. Among the above-mentioned carbon materials, the coke breeze and anthracite correspond to the first carbonaceous material in the present embodiment, and the biomass charcoal corresponds to the second carbonaceous material in the present embodiment. The biomass charcoal is described later.

In the drum mixer 2, the raw materials are mixed with each other, and water is added to the resultant mixture for moisture conditioning, and the mixture is stirred for a predetermined period of time (hereinafter, referred to as "granulation time"). Thus, a sintering raw material containing the raw material granulated so as to have a predetermined average particle diameter (hereinafter, referred to as "granulated raw material") is prepared. That is, the sintering raw material prepared by the drum mixer 2 contains the granulated raw material as well as the raw materials that have not yet been granulated (hereinafter, referred to as "ungranulated raw materials"). The proportion of the ungranulated raw materials contained in the sintering raw material varies depending on the amount of water added to the mixture or the granulation time. For example, when the amount of water added to the mixture is reduced, or when the granulation time is reduced, the proportion of the granulated raw material in the sintering raw material is reduced, and the proportion of the ungranulated raw materials in the sintering raw material is increased. The amount of water or the granulation time, which satisfies a desired proportion of the granulated raw material or ungranulated raw materials in the sintering raw material, can be preliminarily determined by an experiment. The sintering raw material containing the granulated raw material and ungranulated raw materials is conveyed by the conveyer to a surge hopper 3 and stored. The step of preparing a sintering raw material as mentioned above corresponds to the raw material blending step in the present embodiment.

Description of FIG. 1 is continued. Subsequent to the raw material blending step as step S1, the raw material layer forming step is conducted as step S2 in which the above-mentioned sintering raw material is charged on a pallet of a sintering machine, forming a raw material layer on the pallet. Specifically, the sintering raw material stored in the surge hopper 3 shown in FIG. 2 is discharged by a drum feeder 4, and charged on the below-described hearth ore layer 6 through a chute 5, forming a raw material layer 7. In the example shown in FIG. 2, a hearth ore hopper 8 is provided upstream of the surge hopper 3 as viewed in the traveling direction of the sintering raw material in the sintering machine, and hearth ore is stored in the hearth ore hopper 8. The hearth ore is discharged from the drum feeder of the hearth ore hopper 8, and charged on a pallet 10 of a sintering machine 9 through the chute, forming the hearth ore layer 6.

A cut-off gate 11 for smoothing the surface of the raw material layer 7 on the pallet 10 so that the thickness of the raw material layer 7 becomes almost uniform is disposed downstream of the surge hopper 3 as viewed in the traveling direction of the sintering raw material. Thus, the raw material layer 7 having a predetermined thickness is formed. The step of charging the sintering raw material on the pallet 10 to form the raw material layer 7 having a predetermined thickness as mentioned above corresponds to the raw material layer forming step in the present embodiment.

Description of FIG. 1 is further continued. Subsequent to the raw material layer forming step as step S2, the sintering step is conducted as step S3 in which the raw material layer 7 formed on the pallet 10 of the sintering machine 9 is ignited to sinter the sintering raw material. Specifically, as shown in FIG. 2, an ignition furnace 12 is provided downstream of the cut-off gate 11 as viewed in the traveling direction. The carbon material present on the surface of the raw material layer 7 is ignited by the ignition furnace 12. Further, a plurality of wind boxes 13 are disposed below the pallet 10 as viewed in the height direction of the sintering machine 9. A sintering fan 15 is connected to each wind box 13 through an exhaust tube 14. Air is sucked by the sintering fan 15 through the raw material layer 7 toward the wind boxes 13 to circulate air in the direction from the top side to the bottom side of the raw material layer 7, as viewed in the thicknesswise direction of the raw material layer 7. This causes combustion of the carbon material in the sintering raw material to proceed in the direction from the top side to the bottom side of the raw material layer 7. The sintering raw material is heated due to heat of combustion of the carbon material, and at least part of the iron raw material is melted and bonded together, so that sintering of the sintering raw material proceeds in the direction from the top side to the bottom side of the raw material layer 7. Thus, a sintered layer (which is referred to also as "sintered cake") is formed on the pallet 10 of the sintering machine 9. The step of sintering the sintering raw material as mentioned above corresponds to the above-mentioned sintering step.

Further, in the example shown in FIG. 1, a dust collector 16 for collecting airborne dust or finely divided particles in the sintering raw material is provided upstream of the sintering fan 15 as viewed in the direction of flow of air. A stack 17 is provided downstream of the sintering fan 15 as viewed in the direction of flow of air. The air sucked by the sintering fan 15 is discharged to the outside through the stack 17.

The sintered layer formed on the pallet 10 of the sintering machine 9 is discharged out of the sintering machine 9 from an ore discharge part disposed downstream of the sintering machine 9 as viewed in the traveling direction. Then, the sintered layer is crushed by a crusher 18, and classified, and the sintered ore having a predetermined particle diameter is recovered as product sintered ore.

The above-mentioned biomass charcoal is described below. Biomass charcoal means a carbon material derived from an organic resource other than fossil fuels, and the organic resource means biomass. Biomass means a resource which is an organic material derived from animals or plants, except fossil fuels. Specifically, examples of biomass include coconut shell and a bamboo material. Examples of biomass charcoal include coconut shell charcoal and bamboo charcoal, which are respectively produced from coconut shell and a bamboo material as a raw material. Further, the above-mentioned biomass absorbs carbon dioxide until plants which are a raw material for biomass have grown. Therefore, when a fuel using biomass, i.e., biomass charcoal is burnt, the amount of carbon dioxide emitted into the environment can be regarded as zero from the standpoint of carbon neutrality. Accordingly, from the viewpoint of carbon neutrality, incorporation of biomass charcoal into the sintering raw material can be regarded as a reduction of emission of carbon dioxide. Biomass charcoal has a feature that the biomass charcoal has a low combustion start temperature, as compared to coke. Biomass charcoal generally has a combustion start temperature of 550°C or lower, and coke has a combustion start temperature of 650 to 750°C. Biomass charcoal further has a feature that the biomass charcoal has a burning rate higher than the burning rate of coke. The reason for having such features is considered to reside in the catalytic effect of an alkali metal contained in the biomass charcoal, or the porous structure of the biomass charcoal. Therefore, the biomass charcoal more quickly starts combusting than coke to generate heat of combustion. Further, the biomass charcoal has a large volatile content, as compared to coke.

Explanation is made on the method for causing biomass charcoal to undergo segregation on the upper layer side of the raw material layer 7 rather than on the lower layer side. In the present embodiment, as mentioned above, in the drum mixer 2, when the amount of water added to the mixture is reduced, or when the granulation time is reduced, the proportion of the ungranulated biomass charcoal contained in the sintering raw material is increased. The amount of water or the granulation time, which satisfies a desired proportion of the biomass charcoal in the sintering raw material, can be preliminarily determined by an experiment. Further, the particle diameter of the biomass charcoal is smaller than the particle diameter of the coke breeze or anthracite added as a carbon material to the sintering raw material. Therefore, when raw materials having different particle diameters are discharged from the surge hopper 3 by the drum feeder 4, the raw material having a larger particle diameter falls on a position almost immediately below the drum feeder 4, and the raw material having a smaller particle diameter falls on a position away from the drum feeder 4. The drum feeder 4 emits the discharged raw material from the upstream side toward the downstream side as viewed in the traveling direction of the raw material.

Accordingly, when the sintering raw material is discharged by the drum feeder 4, the raw material containing the granulated raw material and having a larger particle diameter falls so as to be along the outer surface of the drum feeder 4, and is charged on the hearth ore layer 6 positioned almost immediately below the drum feeder 4. On the other hand, the biomass charcoal falls on a position away from the drum feeder 4, i.e., the chute 5 side positioned downstream of the drum feeder 4 as viewed in the traveling direction. Thus, the biomass charcoal undergoes segregation in the upper layer of the raw material layer 7 rather than in the lower layer. The upper layer of the raw material layer 7 means the layer positioned above an almost middle portion of the raw material layer 7, as viewed in the thicknesswise direction of the raw material layer 7, and the lower layer of the raw material layer 7 means the layer positioned below an almost middle portion of the raw material layer 7, as viewed in the thicknesswise direction of the raw material layer 7.

### (Advantageous Effects of Invention)

In the present embodiment, biomass charcoal is caused to undergo segregation in the upper layer of the raw material layer 7 as mentioned above. In the upper layer of the raw material layer 7, the biomass charcoal quickly starts combusting to generate heat of combustion. The generated heat of combustion can increase the temperature of the upper layer of the raw material layer 7. Therefore, it is possible to suppress a lack of heat in the raw material layer 7 which is cooled by suction of air. Further, formation of unburnt carbon in the upper layer due to a lack of heat can be suppressed. As a result, a sintered ore having a more markedly reduced unburnt carbon content than conventional can be obtained. In addition, the sintered ore can be improved in yield as compared to conventional one.

The above-mentioned embodiment should not be construed as limiting the scope of the present invention. For example, when preparing the sintering raw material in the drum mixer 2, instead of the construction in which the amount of water added to the mixture is reduced or the granulation time is reduced, a construction may be employed in which biomass charcoal is fed to the surge hopper 3 from the hopper having the biomass charcoal stored therein. Even when employing such a construction, substantially the same operation and effects as those obtained by the above-described present embodiment can be achieved. Further, for example, instead of the construction in which the particle diameter of the biomass charcoal is smaller than the particle diameter of coke breeze or anthracite, a construction may be employed in which at least two sintering raw materials having different blending ratios of the biomass charcoal are prepared, and the upper layer of the raw material layer 7 is formed from the sintering raw material having a high blending ratio of the biomass charcoal. Specifically, at least two surge hoppers are disposed in series in the traveling direction in the sintering machine 9. Among the two surge hoppers, in the surge hopper positioned upstream as viewed in the traveling direction, the sintering raw material having a low blending ratio of the biomass charcoal is stored. On the other hand, the sintering raw material having a high blending ratio of the biomass charcoal is stored in the surge hopper positioned downstream as viewed in the traveling direction. Then, the sintering raw materials are charged from the respective surge hoppers on the pallet 10 of the sintering machine 9, forming a raw material layer. As a result, the blending ratio of the biomass charcoal in the lower layer of the raw material layer is low, and the blending ratio of the biomass charcoal in the upper layer of the raw material layer is high. That is, segregation of the biomass charcoal in the upper layer of the raw material layer 7 is caused. Therefore, even when having such a construction, substantially the same operation and effects as those obtained by the above-described present embodiment can be achieved.

### Examples

Explanation is made on the Examples in which effects obtained by segregation of biomass charcoal in the upper layer of the raw material layer were verified. In the Examples, a sintering pot test apparatus having a height of 400 mm and a diameter of 300 mm was prepared, and a batchwise test was conducted using the apparatus. Further, two sintering raw materials having different blending ratios of the biomass charcoal (% by mass; hereinafter, referred to simply as "%") were prepared. Among the sintering raw materials, using the sintering raw material having a high blending ratio (%) of the biomass charcoal, the upper layer of the raw material layer was formed in the above-mentioned apparatus. The blending ratio of the coke which generates the same quantity of heat as the quantity of heat of the biomass charcoal blended in the sintering raw material is taken as a blending ratio of the biomass charcoal.

With respect to each of Examples 1-1 to 2-3, Comparative Examples 1 and 2, and Reference Example, the blending ratio (%) of the biomass charcoal and the blending ratio (%) of the coke are shown in Table 1, wherein the biomass charcoal and the coke form the upper layer and the lower layer of the raw material layer. Further, with respect to each of Examples 1-1 to 2-3, Comparative Examples 1 and 2, and Reference Example, the average blending ratio (%) of the biomass charcoal in the whole of the raw material layer, and the ratio of the blending ratio (%) of the biomass charcoal in the upper layer to the average blending ratio (%) of the biomass charcoal in the whole of the raw material layer are shown in Table 1.

**[Table 1]**

| | | Reference Example | Comparative Example 1 | Example 1-1 | Example 1-2 | Example 1-3 | Comparative Example 2 | Example 2-1 | Example 2-2 | Example 2-3 |
|---|---|---|---|---|---|---|---|---|---|---|
| Upper layer | Blending ratio of biomass charcoal* (%) | 0.0 | 1.0 | 1.2 | 1.4 | 1.6 | 2.0 | 2.4 | 2.8 | 3.2 |
| | Blending ratio of coke (%) | 5.0 | 4.0 | 3.8 | 3.6 | 3.4 | 3.0 | 2.6 | 2.2 | 1.8 |
| Lower layer | Blending ratio of biomass charcoal* (%) | 0.0 | 1.0 | 0.8 | 0.6 | 0.4 | 2.0 | 1.6 | 1.2 | 0.8 |
| | Blending ratio of coke (%) | 5.0 | 4.0 | 4.2 | 4.4 | 4.6 | 3.0 | 3.4 | 3.8 | 4.2 |
| Average blending ratio of biomass charcoal* (%) | | 0.0 | 1.0 | 1.0 | 1.0 | 1.0 | 2.0 | 2.0 | 2.0 | 2.0 |
| Blending ratio of biomass charcoal in upper layer/Average blending ratio of biomass charcoal (-) | | - | 1.0 | 1.2 | 1.4 | 1.6 | 1.0 | 1.2 | 1.4 | 1.6 |

| | | | | | | | | | | |
|---|---|---|---|---|---|---|---|---|---|---|
| * In terms of quantity of heat of coke | | | | | | | | | | |

The coke and biomass charcoal were blended so that the quantity of heat corresponded to 5% blending ratio, in terms of the quantity of heat of average coke breeze. In the Reference Example, basic conditions using only coke were employed. In Comparative Example 1 and Examples 1-1 to 1-3, 20% of the whole of the carbon material was replaced by biomass charcoal, and, in Comparative Example 2 and Examples 2-1 to 2-3, 40% of the whole of the carbon material was replaced by biomass charcoal.

The surface layer of the raw material layer formed in the above-mentioned apparatus was ignited, and air was sucked from the bottom side of the raw material layer to sinter the raw material layer, preparing a sintered cake. Then, using a sample taken from the sintered cake after measuring a yield, an unburnt carbon ratio was measured. Specifically, a sample was taken from the upper layer 1/2 of the sintered cake in each of Comparative Examples 1 and 2 and Examples 1-1 to 2-3, and, using the sample, a carbon amount in each of Comparative Examples 1 and 2 and Examples 1-1 to 2-3 was measured. The measurement method for a carbon amount may be a conventionally known chemical analysis method. A sample was similarly taken from the upper layer 1/2 of the sintered cake in the Reference Example, and, using the sample, a carbon amount in the Reference Example was measured. Then, the carbon amount in each of Comparative Examples 1 and 2 and Examples 1-1 to 2-3 was divided by the carbon amount in the Reference Example to determine an unburnt carbon ratio in the sintered cake in each of Comparative Examples 1 and 2 and Examples 1-1 to 2-3. The expression "upper layer 1/2" means an almost middle portion of the upper layer of the sintered cake, as viewed in the thicknesswise direction of the sintered cake.

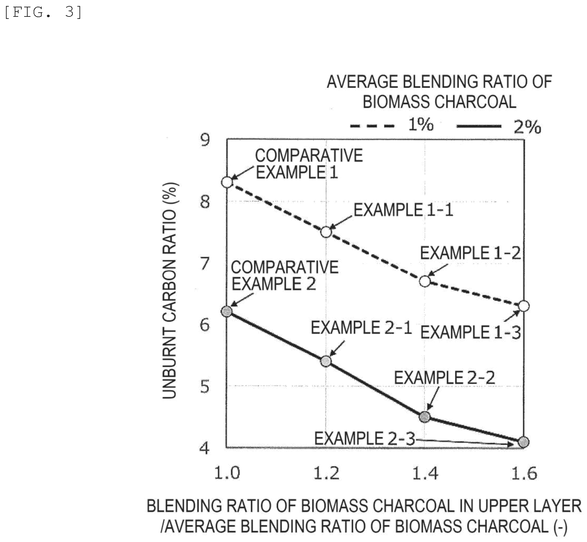

FIG. 3 is a diagram with respect to Comparative Examples 1 and 2 and Examples 1-1 to 2-3, showing the relationship between the unburnt carbon ratio and the ratio of the blending ratio (%) of the biomass charcoal in the upper layer to the average blending ratio (%) of the biomass charcoal in the whole of the raw material layer. As seen in FIG. 3, it was found that, as the ratio of the blending ratio (%) of the biomass charcoal in the upper layer to the average blending ratio (%) of the biomass charcoal in the whole of the raw material layer is increased, the unburnt carbon ratio is reduced. Further, it was found that, as the average blending ratio (%) of the biomass charcoal in the whole of the raw material layer is increased, the unburnt carbon ratio is reduced.

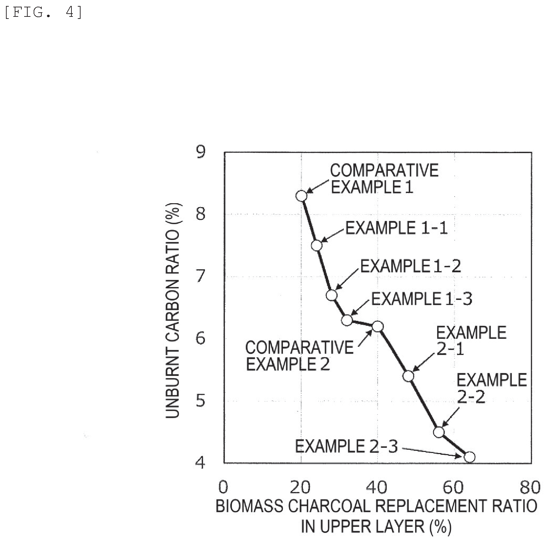

FIG. 4 is a diagram with respect to Comparative Examples 1 and 2 and Examples 1-1 to 2-3, showing the relationship between the unburnt carbon ratio and the proportion of the biomass charcoal in the whole of the carbon material in the upper layer, i.e., the biomass charcoal replacement ratio (%). As seen in FIG. 4, it was found that, as the biomass charcoal replacement ratio (%) is increased, the unburnt carbon ratio is reduced. From the above results, it has been found that when heat of combustion of the carbon material in the upper layer of the raw material layer is substantially constant, segregation of the biomass charcoal in the upper layer can reduce the unburnt carbon ratio in the sintered ore formed in the upper layer of the raw material layer.

Further, in the above-mentioned Examples, segregation of biomass charcoal in the upper layer of the raw material layer was caused, but, as compared to a conventional method for producing a sintered ore using no biomass charcoal, a reduction of the yield of the sintered ore was not found. The reason for this is presumed as follows. The heat of combustion of biomass charcoal is low, as compared to that of coke, but the biomass charcoal more quickly starts combusting than coke to generate heat of combustion, and the generated heat of combustion compensates for heat of the upper layer of the raw material layer. As a result, a lack of heat in the upper layer of the raw material layer was suppressed, making it possible to suppress formation of unburnt carbon.

### Reference Signs List

- 1:: Hopper
- 2:: Drum mixer
- 3:: Surge hopper
- 4:: Drum feeder
- 5:: Chute
- 6:: Hearth ore layer
- 7:: Raw material layer
- 8:: Hearth ore hopper
- 9:: Sintering machine
- 10:: Pallet
- 11:: Cut-off gate
- 12:: Ignition furnace
- 13:: Wind box
- 14:: Exhaust tube
- 15:: Sintering fan
- 16:: Dust collector
- 17:: Stack
- 18:: Crusher
- S1:: Raw material blending step
- S2:: Raw material layer forming step
- S3:: Sintering step

## Claims

1. A method for producing a sintered ore, comprising the steps of: blending an iron raw material, a first carbonaceous material, and a second carbonaceous material having a combustion start temperature lower than that of the first carbonaceous material to prepare a sintering raw material (raw material blending step); feeding the sintering raw material on a pallet of a sintering machine to form a raw material layer (raw material layer forming step); and igniting a surface of the raw material layer to sinter the sintering raw material (sintering step),
wherein, in the raw material layer forming step, the blending ratio of the second carbonaceous material in an upper layer of the raw material layer is higher than the blending ratio of the second carbonaceous material in a lower layer of the raw material layer, wherein the upper layer of the raw material layer is positioned above a middle portion of the raw material layer, as viewed in the thicknesswise direction of the raw material layer, and the lower layer of the raw material layer is positioned below the middle portion of the raw material layer, as viewed in the thicknesswise direction of the raw material layer.

2. The method for producing a sintered ore according to claim 1, wherein the second carbonaceous material has a particle diameter smaller than the particle diameter of the first carbonaceous material, and
wherein, in the raw material layer forming step, the sintering raw material stored in a surge hopper is discharged by a drum feeder and fed on the pallet.

3. The method for producing a sintered ore according to claim 1 or 2, wherein the first carbonaceous material blended in the sintering raw material in the raw material blending step is a fossil fuel-derived carbon material, and the second carbonaceous material is a carbon material other than fossil fuels.
